# EUROPEAN PATENT SPECIFICATION

(11) **EP 3 008 288 B1**
(45) Date of publication and mention of the grant of the patent: **05.12.2018**
(21) Application number: 14782820.6
(22) Date of filing: 07.04.2014
(51) Int. Cl.: E21C 41/16, E21F 13/02, B60P 1/64, E21F 13/00, E21F 13/06

(54) **APPARATUS FOR EXTRACTING ORE FROM BLOCK CAVES AND METHOD AND SYSTEM THEREFOR**
VORRICHTUNG ZUR ERZEXTRAKTION AUS BLOCKHÖHLEN SOWIE VERFAHREN UND SYSTEM DAFÜR
APPAREIL D'EXTRACTION DE MINERAI EN PROVENANCE DE BLOCS FOUDROYÉS ET PROCÉDÉ ET SYSTÈME POUR CELUI-CI

(30) Priority: 08.04.2013 AU 2013901182
(43) Date of publication of application: 20.04.2016
(73) Proprietor: Russell Mineral Equipment Pty Ltd, Toowoomba, Queensland 4350 (AU)
(72) Inventor: RUBIE, Peter, John, Toowoomba, QLD 4350 (AU)
(74) Representative: Browne, Robin Forsythe
(86) International application number: PCT/AU2014/000375
(87) International publication number: WO 2014/165903

(56) References cited:
- WO-A1-89/06207
- WO-A1-89/06207
- DE-A1- 4 316 677
- US-A- 4 007 693
- US-A- 5 944 471
- US-A1- 2013 049 435

## Description

### TECHNICAL FIELD

The present invention relates to apparatus, method and system for extracting ore from block caves. In particular, the present invention relates to automated guided vehicles and associated apparatus, for a block caving mining operation.

### BACKGROUND

Block and panel caving is an efficient technique that uses gravity to extract ore from an ore body. Caverns of broken rock are blasted at an upper level beneath the ore body to be recovered, extraction tunnels are formed at a lower level there below and a series of relatively narrow drawbells are blasted between the upper and lower levels to allow broken cavern rock to fall through the drawbells into the underlying extraction tunnels, through which the rock can be removed. A description of block caving is found in the background of International Publication NO. WO201 1/100808 by Technological Resources Pty Limited entitled "Underground Mining" and the method of rock blasting is described in the background of US Patent Publication No. 2012/0242135 by Thomson et al. entitled "Method of Underground Rock Blasting".

The extracting of the ore from the draw points and its delivery to a crusher is conventionally carried out by an autonomous guide vehicle (AGV) known as Load Haul Dump (LHD) unit.

These units are typically semi-automated and remotely controlled by an operator. The problem with this method is that each load carried by an LHD unit takes several minutes due to the travel distance between the draw point and the crusher. To achieve high tonnages many LHD units are required and because they are large machines, traffic management becomes an issue and "bottlenecking" around the crusher and shared drives limits production.

Each LHD unit typically has a front bucket for loading and carrying ore, and the size of this bucket generally determines the width of the vehicle. In many block caving operations the tunnels have a width of about 5m, and two LHD units cannot readily pass each other. Typically an LHD will be brought into a branch tunnel or park bay in order for another LHD to pass.

WO 89/06207 discloses a U-shaped multi-purpose vehicle particularly adapted for underground digging and hauling comprising: a U-shaped frame having opposing sides and front ends connected by a front piece, and rear ends defining an open interior space in communication with an open front end; wheel mounts capable of pivoting attached to the opposing sides; a plurality of wheels independently suspended and rotatably attached to the wheel mounts; pivot mounts associated with the wheel mounts to pivot and turn each wheel in a desired direction; independent drive associated with each wheel to rotate the wheels forward and backward; a power source operably associated with the pivot mounts and independent drive; and a control system mounted to the frame and associated with the drive, pivot mounts and power source to selectively activate the drive and pivot mounts to align and drive each wheel at the desired speed and direction.

US 4007693 discloses a train system particularly adapted to be used in tunnelling operation to outwardly move the loosened earth and rock or muck and, for that purpose, which is trackless and takes its lateral guidance from the usual utility duct which is required along the tunnel. This trackless train system also includes wagons having each a walking beam suspension which supports the load carrying ground wheels in a longitudinal central row, such that the wagon rides on a tunnel floor which is uneven or which has a transversely concave profile, such as to form an underground conduit.

US 2013/049435 discloses a material and equipment recovery system for high risk environments. The recovery system having a recovery vehicle, a surface control station, and a communication link between them, which may be an Ethernet link. The recovery vehicle has an operable recovery implement suitable to its particular application. The surface control station has an operator station from which an operator can operate the recovery vehicle remotely. Cameras on the recovery vehicle provide images for an operator to manoeuvre the recovery vehicle and monitor systems on the recovery vehicle. The surface control station also has a winch and recovery cable that attaches to the recovery vehicle to retrieve it should it become disabled. An optical alignment device on the surface control station allows alignment of the surface control station to keep the retrieval cable effective. The recovery vehicle and control station have hitch elements and the recovery vehicle can reposition the control station at a site.

The present invention seeks to overcome at least some of the abovementioned disadvantages by providing apparatus, method and system for extracting ore from block caves.

### SUMMARY OF THE INVENTION

According to a first aspect the present invention consists in a combination of a loader unit and haul unit for use in a block caving mining operation, each of said loader unit and haul unit comprising a removable bucket which can be used for loading ore, wherein in use said bucket carrying a load of ore can be transferred from said loader unit to said haul unit so that said haul unit can transport said ore from a loading site to a crusher.

Preferably each of said loader unit and said haul unit have a respective longitudinal axis extending from the fore end to the aft thereof, and said bucket is elongate with a longitudinal axis, and in use when said bucket is mounted to the said loader unit the longitudinal axis of said bucket is disposed orthogonally to the longitudinal axis of said loader unit, and when said bucket is transferred to said haul unit said bucket is placed upright on said haul unit with the longitudinal axis of said bucket parallel to the longitudinal axis of said haul unit.

Preferably the width of said haul unit with said bucket mounted thereon is substantially narrower than said loader unit with said bucket mounted thereon.

Preferably with said bucket removed said haul unit is substantially smaller than said loader unit with said bucket removed.

Preferably in use said bucket carrying a load of ore can be transferred from said haul unit to a handling mechanism able to manipulate said bucket so that said load of ore is emptied into a dump station of said crusher.

Preferably said bucket has at least two female attachment members, each female attachment member at opposed ends of said bucket.

Preferably said loader unit has two spaced apart male attachment members each of which is adapted to slidably engage with a respective said female attachment member.

Preferably said haul unit has two spaced apart recesses each of which is adapted to engage with a respective spaced apart male projections projecting from the base of said bucket.

Preferably both said loader unit and haul unit are AGVs.

Preferably in alternative embodiment said loader unit is an AGV and said haul unit is an AGV mounted on a suspended mono-rail system.

According to a second aspect the present invention consists in a bucket for use in a block caving mining operation, said bucket being removably attachable to a loader unit and a haul unit, said bucket capable of being transferred from said loader unit to said haul unit and vice versa.

Preferably each of said loader unit and haul unit have a respective longitudinal axis extending from the fore end to the aft thereof, and said bucket is elongate with a longitudinal axis, and in use when said bucket is mounted to the said loader unit the longitudinal axis of said bucket is disposed orthogonally to the longitudinal axis of said loader unit, and when said bucket is transferred to said haul unit said bucket is placed upright on said haul unit with the longitudinal axis of said bucket parallel to the longitudinal axis of said haul unit.

Preferably the width of said haul unit with said bucket mounted thereon is substantially narrower than said loader unit with said bucket mounted thereon.

Preferably with said bucket removed said haul unit is substantially smaller than said loader unit with said bucket removed.

Preferably in use said bucket carrying a load of ore can be transferred from said haul unit to a handling mechanism able to manipulate said bucket so that said load of ore is emptied into a dump station of said crusher.

Preferably said bucket has at least two female attachment members, each female attachment member at opposed ends of said bucket.

Preferably said loader unit has two spaced apart male attachment members each of which is adapted to slidably engage with a respective said female attachment member.

Preferably said haul unit has two spaced apart recesses each of which is adapted to engage with a respective spaced apart male projections projecting from the base of said bucket.

Preferably both said loader unit and haul unit are AGVs.

Preferably in an alternative embodiment said loader unit is an AGV and said haul unit is an AGV mounted on a suspended mono-rail system.

According to a third aspect the present invention consists in a method for ore extraction in a block caving mining operation, said method comprising the use of at least one removable bucket capable of being removably attached to a loader unit and a haul unit, wherein in use said removable bucket when mounted on said loader unit can be used for loading ore at a loading site, and said removable bucket carrying a load of ore can be transferred from said loader unit to said haul unit so that said haul unit can transport said load of ore from a loading site to a crusher.

Preferably each of said loader unit and haul unit have a respective longitudinal axis extending from the fore end to the aft thereof, and said bucket is elongate with a longitudinal axis, and in use when said bucket is mounted to the said loader unit the longitudinal axis of said bucket is disposed orthogonally to the longitudinal axis of said loader unit, and when said bucket is transferred to said haul unit said bucket is placed upright on said haul unit with the longitudinal axis of said bucket parallel to the longitudinal axis of said haul unit.
preferably the width of said haul unit with said bucket mounted thereon is substantially narrower than said loader unit with said bucket mounted thereon.

Preferably with said bucket removed said haul unit is substantially smaller than said loader unit with said bucket removed.

Preferably in use said bucket carrying a load of ore can be transferred from said haul unit to a handling mechanism able to manipulate said bucket so that said load of ore is emptied into a dump station of said crusher.

Preferably said bucket has at least two female attachment members, each female attachment member at opposed ends of said bucket, and said loader unit has two spaced apart male attachment members each of which is adapted to slidably engage with a respective said female attachment member.

Preferably both said loader unit and haul unit are AGVs.

Preferably in alternative embodiment said loader unit is an AGV and said haul unit is an AGV mounted on a suspended mono-rail system.

According to a fourth aspect the present invention consists in a system for ore extraction in a block caving mining operation, said system comprising,
a plurality of buckets, each of which capable of being used to load and carry ore;
a plurality of loader units, each capable of having one of said buckets removably attached thereto;
a plurality of haul units, each capable of having one of said buckets removably mounted thereto; and
at least one handling mechanism associated with a dump station of a crusher is able to receive and manipulate said buckets, wherein in use at least one of said loader units with a first of said buckets attached thereto can be used for loading and carrying a load of ore at a loading site, and said first bucket can be transferred from said at least one loader unit to at least one of said haul units so that said at least one haul unit can transport said load of ore from the loading site to a crusher.

Preferably said at least one loader unit and said at least one haul unit have a respective longitudinal axis extending from the fore end to the aft thereof, and said first bucket is elongate with a longitudinal axis, and in use when said first bucket is mounted to said loader unit the longitudinal axis of said first bucket is disposed orthogonally to the longitudinal axis of said loader unit, and when said first bucket is transferred to said haul unit said first bucket is placed upright on said haul unit with the longitudinal axis of said first bucket parallel to the longitudinal axis of said haul unit.

Preferably the width of said at least one haul unit with said first bucket mounted thereon is substantially narrower than said at least one loader unit with said first bucket mounted thereon.

Preferably with said first bucket removed said at least one haul unit is substantially smaller than said at least one loader unit with said first bucket removed.

Preferably in use said first bucket carrying said load of ore can be transferred from said at least one haul unit to said handling mechanism so that said load of ore is emptied into said dump station.

Preferably each of said buckets has at least two female attachment members, and each of said loader units have two spaced apart male attachment members each of which is adapted to slidably engage with a respective said female attachment member of one of said buckets.

Preferably both said loader units and haul units are AGVs.

Preferably in an alternative embodiment said loader units are AGVs and said haul units are AGVs mounted on a suspended mono-rail system.

### BRIEF DESCRIPTION OF THE DRAWINGS

A preferred embodiment of the invention will now be described, by way of example only, with reference to the accompanying drawings in which:
Fig. 1 is a perspective view of a first embodiment of a loader unit with bucket attached in accordance with the present invention.
Fig. 2 is a perspective view of a first embodiment of a haul unit carrying a bucket in accordance with the present invention.
Fig. 3 is reduced perspective view of the loader unit of Fig. 1 placing a bucket carrying a load of ore on a haul unit of Fig. 2.
Fig. 4 is a perspective view of the loader unit of Fig. 1 after it has placed a bucket carrying a load of ore on haul unit of Fig. 2.
Fig. 5 is reduced perspective view of the haul unit of Fig. 2 at a dump station with a bucket carrying a load of ore being emptied into the dump station.
Fig. 6 is reduced perspective view of the dump station in Fig 4 with a bucket carrying a load of ore supported by the handling mechanism of the dump station.
Fig 7 is a perspective view of two haul units passing each other in a tunnel.

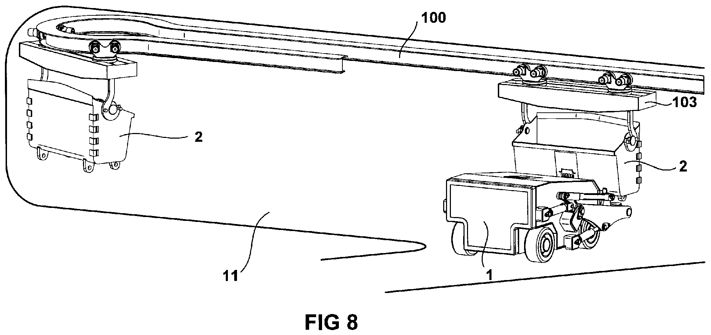

Fig. 8 depicts a reduced perspective of a loader unit unit of Fig. 1 passing a bucket to a haul unit in an alternative embodiment, where the haul unit is movably mounted to a mono-rail.

### BEST MODE OF CARRYING OUT INVENTION

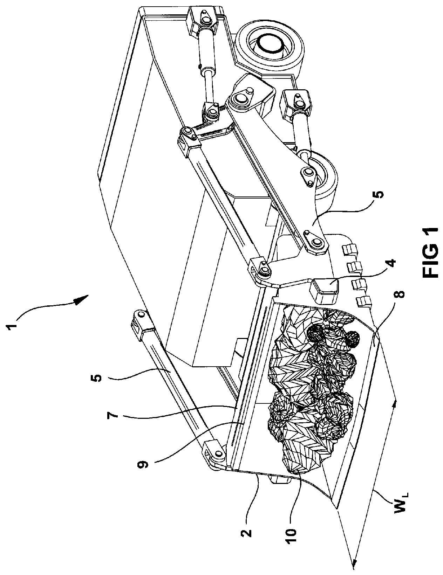

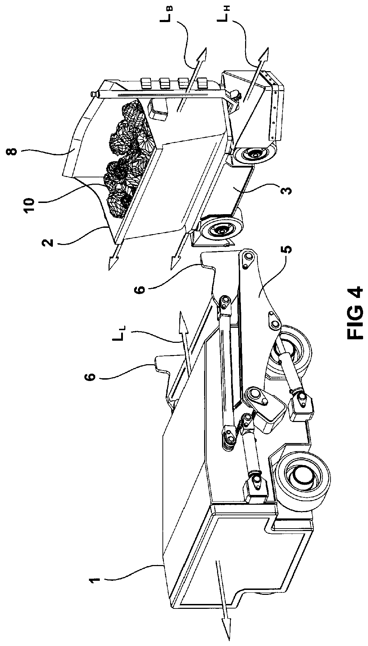

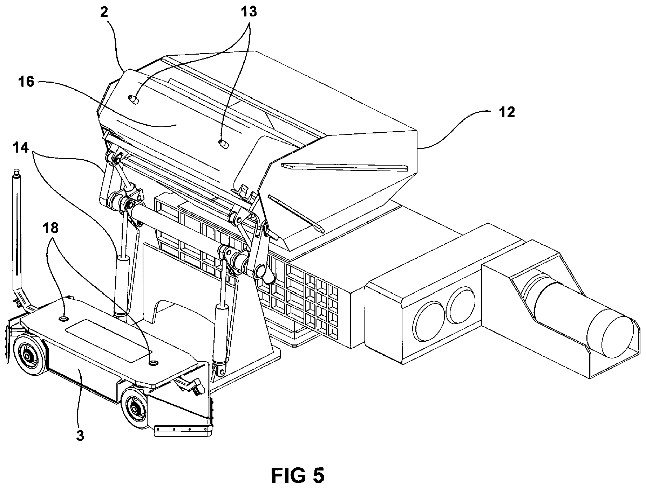

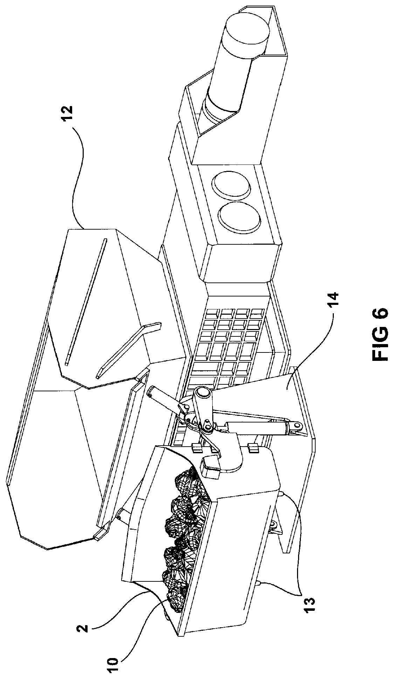

Figs. 1 to 6 depict various apparatuses in a first embodiment that make up a system for ore extraction in a block caving mining operation.

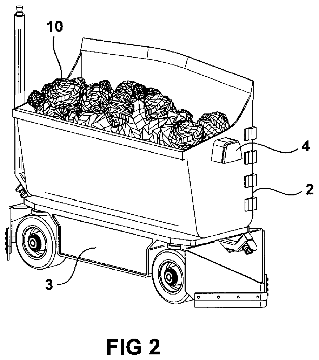

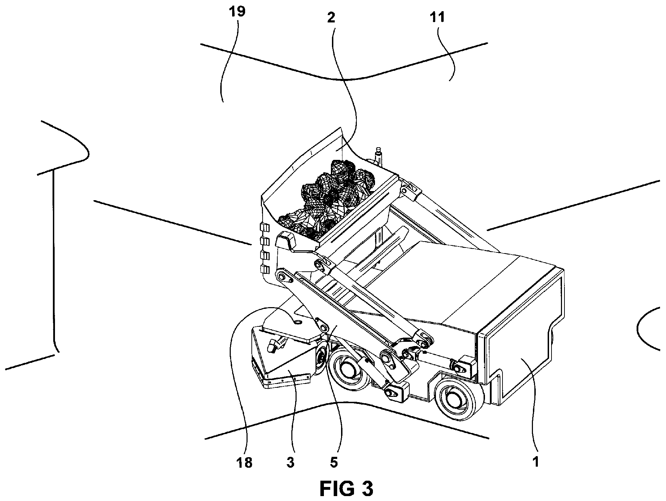

Fig. 1 depicts a loader unit 1 with a removable bucket 2 for use at a draw point for scooping up a load of ore 10. Loader unit 1 is able to orient bucket 2 such that it is upright (open end upwards), and transfer bucket 2 to a haul unit 3, as shown in Figs 2 and 3.

Both loader unit 1 and haul unit 2 are preferably autonomous guide vehicles (AGVs) that are semi-automated and remotely controlled by an operator.

Bucket 2 has two female attachment members 4 at opposed ends thereof and scoop 8. The bucket also has to spaced-apart male projections 13 projecting from its base 16.

Loader unit 1 is provided with a hydraulically actuated linkage assembly 5 having two spaced-apart prongs 6 adapted to engage female attachment members 4. When bucket 2 is attached to load unit 1, a cross member 7 of linkage assembly 5 is disposed near or abuts a lip 9 of bucket 2.

In use, a loader unit 1 with bucket 2 attached thereto is able to scoop up a load of ore 10. By means of manipulating linkage assembly 5, bucket 2 is oriented such that it can be placed on haul unit 3 in an upright position. The projections 13 engage with recesses 18 in haul unit 3 to ensure bucket 2 is correctly seated.

Haul unit 3 may then be used to transport load of ore 10 through a tunnel 11 to a dump station 12 associated with a crusher. Dump station 12 has a handling mechanism 14 for removing bucket 2 from haul unit 3 and manipulating it so that bucket 2 is overturned and emptied into dump station 12.

Loader unit 1 and haul unit 3 have respective longitudinal axes L_{L} and L_{H} extending from the fore end to the aft thereof. Bucket 2 which is elongate, has a longitudinal axis L_{B}, In use when bucket 2 is mounted to loader unit 1, longitudinal axis L_{B} of bucket 2 is disposed orthogonally to longitudinal axis L_{L} of loader unit 1. When bucket 2 is transferred to haul unit 3, bucket 2 is placed upright thereon with its longitudinal axis L_{B} parallel to the longitudinal axis L_{H} of haul unit 3.

With the bucket removed, haul unit 3 is substantially smaller than loader unit 1. Also, with bucket 2 mounted (or supported) by haul unit 3 in an upright position, the width W_{H} of haul unit is substantially narrower than the width W_{L} of loader unit 1 with bucket mounted thereon.

In use, the system preferably relies on a plurality of loader units 1 being used to scoop up loads of ore 10 using removable buckets 2, and a plurality of haul units 3 to transfer ore 10 through tunnel 11 to dump station 12.

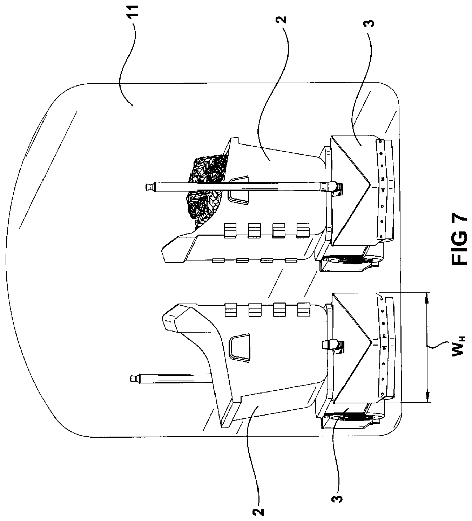

Because haul units 3 are smaller and narrower than loader units 1, and because of the manner in which each bucket 2 is mounted on a respective haul unit 3, it is much easier to navigate haul units 3 within a tunnel 11. This means that loader units 1 can be used in and around the draw point 19, and haul units used to more easily navigate through tunnels 11. Because of the narrower width of haul units 3, and the way a bucket 2 is supported on a haul unit 3, it is possible to more readily have two haul units 3 pass each other in tunnel 11 as shown in Fig. 7.

The plurality of like buckets 2 used in the system are able to be picked up by any loader unit 1 for scooping up ore, and able to be transferred to any haul unit 3 for transportation to dump station 12.

In an alternative embodiment, a mono-rail 100 is employed. Loader unit 1 and removable bucket 2 of the first embodiment are still used at the draw point 19 to scoop up ore. However in this alternative embodiment a haul unit 103, in the form of a mono-rail carriage, is able to have bucket 2 transferred and secured to it from loader unit 1. Preferably haul unit 103 is also an AGV. Once bucket 2 is supported by haul unit 103, it may be transported along mono-rail 100 through tunnel 11 to a dump station 12. In this embodiment, bucket 2 does not need to have projections 13 of the first embodiment. Dump station for this alternative embodiment may have a handling mechanism 14 for removing bucket 2 and manipulating it so that it is overturned and emptied into dump station 12. However, in another not shown embodiment, a handling mechanism could be provided for overturning and emptying a bucket 2 into a dump station, whilst bucket remains 2 suspended from haul unit 103.

In both of the above described embodiments traffic management can be improved and "bottlenecking" around the dump station 12 for the crusher can be minimized or eliminated.

In the abovementioned embodiments loader unit 1 and haul unit 3 are shown as AGV's having four wheels, however it should be understood that in other embodiments they may have other wheel or track arrangements.

Whilst in the abovementioned embodiments the loader unit 1 utilises prongs 6 of linkage assembly 5 to engage with female members 4 on bucket 2, it should be understood that in other not shown embodiments some other method of attaching or engagement could be used between loader unit 1 and bucket 2. Similarly, whilst bucket 2 utilises projections 13 to engage with recesses 18 on haul unit 3, it should be understood that in other not shown embodiments some other method of attaching or engagement could be used between haul unit 3 and bucket 2.

The terms "comprising" and "including" (and their grammatical variations) as used herein are used in inclusive sense and not in the exclusive sense of "consisting only of.

## Claims

1. A block caving mining apparatus comprising:
a) a loader unit (1); and
b) a haul unit (3);
wherein in use the loader unit is able to transfer a removably attachable bucket carrying a load of ore to the haul unit so that the haul unit is able to transport said ore from a loading site to a crusher.

2. The apparatus as claimed in claim 1, wherein each of said loader unit (1) and said haul unit (3) have a respective longitudinal axis extending from the fore end to the aft thereof, and said bucket (2) is elongate with a longitudinal axis, and in use when said bucket (2) is mounted to the said loader unit (1) the longitudinal axis of said bucket (2) is disposed orthogonally to the longitudinal axis of said loader unit (1), and when said bucket (2) is transferred to said haul unit (3) said bucket (2) is placed upright on said haul unit (3) with the longitudinal axis of said bucket (2) parallel to the longitudinal axis of said haul unit (3).

3. The apparatus as claimed in claim 1 or 2, wherein the width of said haul unit (3) with said bucket (2) mounted thereon is narrower than said loader unit (1) with said bucket (2) mounted thereon.

4. The apparatus as claimed in any preceding claim, wherein with said bucket (2) removed said haul unit (3) is smaller than said loader unit (1) with said bucket (2) removed.

5. The apparatus as claimed in any preceding claim, wherein in use said bucket (2) carrying a load of ore is transferred from said haul unit (3) to a handling mechanism (14) able to manipulate said bucket (2) so that said load of ore is emptied into a dump station (12) of said crusher.

6. The apparatus as claimed in any preceding claim, wherein said bucket (2) has at least two female attachment members (4), each female attachment member (4) at opposed ends of said bucket (2).

7. The apparatus as claimed in claim 6, wherein said loader unit (1) has two spaced apart male attachment members (6) each of which is slidably engageable with a respective said female attachment member (4).

8. The apparatus as claimed in any preceding claim, wherein said haul unit (3) has two spaced apart recesses (18) each of which is adapted to engage with a respective spaced apart male projection (13) projecting from the base of said bucket (2).

9. The apparatus as claimed in any preceding claim, wherein both said loader unit (1) and haul unit (3) are Autonomous Guided Vehicles (AGVs).

10. The apparatus as claimed in any preceding claim, wherein said loader unit (1) is an Autonomous Guided Vehicle (AGV) and said haul unit (3) is an Autonomous Guided Vehicle (AGV) mounted on a suspended mono-rail system.

11. A method for ore extraction in a block caving mining operation, said method comprising:
a) loading ore at a loading site into a removable bucket (2) mounted to a loading unit (1);
b) transferring said removable bucket (2) carrying a load of ore from the loading unit (1) to a haul unit (3); and;
c) transporting the removable bucket (2) carrying the load of ore from the loading site to a crusher via the haul unit (3).

12. The method as claimed in claim 11, wherein each of said loader unit (1) and haul unit (3) have a respective longitudinal axis extending from the fore end to the aft thereof, and said bucket (2) is elongate with a longitudinal axis, and in use when said bucket (2) is mounted to the said loader unit (1) the longitudinal axis of said bucket (2) is disposed orthogonally to the longitudinal axis of said loader unit (1), and when said bucket (2) is transferred to said haul unit (3) said bucket (2) is placed upright on said haul unit (3) with the longitudinal axis of said bucket (2) parallel to the longitudinal axis of said haul unit (3).

13. The method of claim 11 or 12, further including transferring the removable bucket (2) carrying the load of ore from said haul unit (3) to a handling mechanism (14) able to manipulate said bucket (2) so that said load of ore is emptied into a dump station (12) of said crusher.

14. A system for ore extraction including the block caving mining apparatus of any preceding claims 1-10, said system comprising:
a) a plurality of said buckets (2) used to load and carry ore;
b) a plurality of said loader units (1), each capable of having one of said buckets (2) removably attached thereto;
c) a plurality of said haul units (3), each capable of having one of said buckets (2) removably mounted thereto; and
d) at least one handling mechanism (14) associated with a dump station (12) of a crusher that is able to receive and manipulate said buckets (2), wherein in use at least one of said loader units (1) with a first of said buckets (2) attached thereto is used for loading a load of ore at a loading site, and said first bucket (2) is transferred from said at least one loader unit (1) to at least one of said haul units (3) so that said at least one haul unit (3) is able to transport said load of ore from the loading site to a crusher.

15. The system as claimed in claim 14, wherein both said loader units (1) and said haul units (3) are Autonomous Guided Vehicles (AGVs).

## Patentansprüche

1. Blockhöhlenabbauvorrichtung, die Folgendes aufweist:
a) eine Beladeeinheit (1); und
b) eine Transporteinheit (3);
wobei die Beladeeinheit im Betrieb in der Lage ist, einen abnehmbar anbringbaren Schaufelbehälter, der eine Ladung Erz trägt, an die Transporteinheit zu übergeben, so dass die Transporteinheit in der Lage ist, dieses Erz von einem Beladeort zu einem Zerkleinerer zu transportieren.

2. Vorrichtung gemäß Anspruch 1,
wobei jede von der Beladeeinheit (1) und der Transporteinheit (3) eine jeweilige Längsachse aufweist, die sich von dem vorderen Ende zum hinteren Ende derselben erstreckt, und wobei der Schaufelbehälter (2) langgestreckt entlang einer Längsachse ausgebildet ist, und wenn der Schaufelbehälter (2) im Betrieb an der Beladeeinheit (2) angebracht ist, die Längsachse des Schaufelbehälters (2) orthogonal zu der Längsachse der Beladeeinheit (1) angeordnet ist, und wenn der Schaufelbehälter (2) an die Transporteinheit (3) übergeben wird, der Schaufelbehälter (2) aufrecht an der Transporteinheit (3) mit der Längsachse des Schaufelbehälters (2) parallel zu der Längsachse der Transporteinheit (3) angebracht wird.

3. Vorrichtung gemäß Anspruch 1 oder 2,
wobei die Breite der Transporteinheit (3) mit dem daran angebrachten Schaufelbehälter (2) schmaler als die Beladeeinheit (1) mit dem daran angebrachten Schaufelbehälter (2) ist.

4. Vorrichtung gemäß einem der vorhergehenden Ansprüche,
wobei die Transporteinheit (3) ohne den abgenommenen Schaufelbehälter (2) kleiner als die Beladeeinheit (1) ohne den abgenommenen Schaufelbehälter (2) ist.

5. Vorrichtung gemäß einem der vorhergehenden Ansprüche,
wobei der Schaufelbehälter (2), der eine Ladung Erz trägt, im Betrieb von der Transporteinheit (3) an einen Handhabungsmechanismus (14) übergeben wird,
der in der Lage ist, den Schaufelbehälter so zu handhaben, dass die Ladung Erz in eine Abladestation (12) des Zerkleinerers geleert wird.

6. Vorrichtung gemäß einem der vorhergehenden Ansprüche,
wobei der Schaufelbehälter (2) mindestens zwei Aufnahmeanbringungselemente (4) aufweist, wobei die jeweiligen Aufnahmeanbringungselemente (4) sich an gegenüberliegenden Enden des Schaufelbehälters (2) befinden.

7. Vorrichtung gemäß Anspruch 6,
wobei die Beladeeinheit (1) zwei voneinander beabstandete Vorsprungsanbringungselemente (6) aufweist, von denen jedes verschiebbar und einrastbar mit dem jeweiligen Aufnahmeanbringungselement (4) ist.

8. Vorrichtung gemäß einem der vorhergehenden Ansprüche
wobei die Transporteinheit (3) zwei voneinander beabstandete Aussparungen (18) aufweist, von denen jede dazu ausgelegt ist, mit einem jeweiligen, beabstandeten Vorsprung (13), der von der Grundplatte des Schaufelbehälters (2) vorsteht, in Eingriff zu kommen.

9. Vorrichtung gemäß einem der vorhergehenden Ansprüche,
wobei sowohl die Beladeeinheit (1) als auch die Transporteinheit (3) fahrerlose Transportfahrzeuge (Autonomous Guided Vehicles - AGVs) sind.

10. Vorrichtung gemäß einem der vorhergehenden Ansprüche,
wobei die Beladeeinheit (1) ein fahrerloses Transportfahrzeug (Autonomous Guided Vehicle - AGV) ist und die Transporteinheit (3) ein fahrerloses Transportfahrzeug (Autonomous Guided Vehicle - AGV) ist, das an einem hängenden Einschienenbahnsystem angebracht ist.

11. Verfahren zur Erzförderung in einem Blockhöhlenabbaubetrieb,
das Folgendes umfasst:
a) Laden von Erz an einem Beladesort in einen anbringbaren Schaufelbehälter (2), der an einer Beladeeinheit (1) angebracht ist;
b) Übergeben des anbringbaren Schaufelbehälters (2), der eine Ladung Erz trägt, von der Beladeeinheit (1) an eine Transporteinheit (3); und
c) Transportieren des anbringbaren Schaufelbehälters (2), der eine Ladung Erz trägt, von dem Beladeort zu einem Zerkleinerer mittels der Transporteinheit (3).

12. Verfahren gemäß Anspruch 11,
wobei jede von der Beladeeinheit (1) und der Transporteinheit (3) eine jeweilige Längsachse aufweist, die sich von dem vorderen Ende zum hinteren Ende derselben erstreckt, und wobei der Schaufelbehälter (2) langgestreckt entlang einer Längsachse ausgebildet ist, und wenn der Schaufelbehälter (2) im Betrieb an der Beladeeinheit (2) angebracht wird, die Längsachse des Schaufelbehälters (2) orthogonal zu der Längsachse der Beladeeinheit (1) angeordnet wird, und wenn der Schaufelbehälter (2) an die Transporteinheit (3) übergeben wird, der Schaufelbehälter (2) aufrecht an der Transporteinheit mit der Längsachse des Schaufelbehälters (2) parallel zu der Längsachse der Transporteinheit (3) angebracht wird.

13. Verfahren gemäß Anspruch, 11 oder 12,
wobei das Verfahren ferner Folgendes umfasst:
Übergeben des Schaufelbehälters (2), der eine Ladung Erz trägt, von der Transporteinheit (3) an einen Handhabungsmechanismus (14), der in der Lage ist, den Schaufelbehälter so zu handhaben, dass die Ladung Erz in eine Abladestation (12) des Zerkleinerers geleert wird.

14. System zur Erzförderung, das eine Blockhöhlenabbauvorrichtung gemäß einem der vorhergehenden Ansprüche 1 bis 10 aufweist,
wobei das System Folgendes aufweist:
a) eine Vielzahl von den Schaufelbehältern (2), die dazu verwendet werden, Erz zu laden und zu transportieren;
b) eine Vielzahl von den Beladeeinheiten (1), die jeweils in der Lage sind, einen der Schaufelbehälter (2) abnehmbar daran angebracht zu haben;
c) eine Vielzahl von den Transporteinheiten (3), die jeweils in der Lage sind, einen der Schaufelbehälter (2) abnehmbar daran angebracht zu haben; und
d) mindestens einen Handhabungsmechanismus (14), der einer Abladestation (12) des Zerkleinerers zugeordnet ist, der in der Lage ist, Schaufelbehälter (2) zu aufzunehmen und zu handhaben, wobei im Betrieb mindestens eine der Beladeeinheiten (1) mit einem daran angebrachten ersten Schaufelbehälter (2) zum Beladen einer Ladung Erz an einem Beladeort verwendet wird, wobei der erste Schaufelbehälter von der mindestens einen Beladeeinheit (1) an mindestens eine der Transporteinheiten (3) übergeben wird, so dass die mindestens eine Transporteinheit (3) in der Lage ist, die Ladung Erz von dem Beladeort zu einen Zerkleinerer zu transportieren.

15. System gemäß Anspruch 14,
wobei sowohl die Beladeeinheiten (1) als auch die Transporteinheiten (3) fahrerlose Transportfahrzeuge (Autonomous Guided Vehicle - AGV) sind.

## Revendications

1. Equipement d'exploitation minière par foudroyage de blocs, comprenant :
a) une unité de chargement (1) ; et
b) une unité de transport (3) ;
selon lequel, lors du fonctionnement, l'unité de chargement est apte à transférer un godet pouvant être fixé de manière amovible et contenant un chargement en minerai vers l'unité de transport de sorte que l'unité de transport est capable de transporter ledit minerai depuis un site de chargement vers un broyeur.

2. Equipement selon la revendication 1, selon lequel chacune de ladite unité de chargement (1) et de ladite unité de transport (3) présente un axe longitudinal respectif s'étendant depuis l'extrémité avant vers l'extrémité arrière, et ledit godet (2) est de forme allongée présentant un axe longitudinal, et lors du fonctionnement lorsque ledit godet (2) est monté sur ladite unité de chargement (1), l'axe longitudinal dudit godet (2) est disposé de manière orthogonale à l'axe longitudinal de ladite unité de chargement (1), et lorsque ledit godet (2) est transféré à ladite unité de transport (3), ledit godet (2) est disposé à la verticale sur ladite unité de transport (3), l'axe longitudinal dudit godet (2) se situant en parallèle à l'axe longitudinal de ladite unité de transport (3).

3. Equipement selon la revendication 1 ou la revendication 2, selon lequel la largeur de ladite unité de transport (3) portant ledit godet (2) monté dessus est plus étroite que ladite unité de chargement (1) portant ledit godet (2) monté dessus.

4. Equipement selon l'une quelconque des revendications précédentes, selon lequel lorsque ledit godet (2) est enlevé, ladite unité de transport (3) est plus petite que ladite unité de chargement (1) lorsque ledit godet est enlevé.

5. Equipement selon l'une quelconque des revendications précédentes, selon lequel lors du fonctionnement ledit godet (2) portant un chargement de minerai est transféré de ladite unité de transport (3) vers un mécanisme de traitement (14) capable de manipuler ledit godet (2) de telle sorte que le chargement de minerai est vidé dans une station de déchargement (12) dudit broyeur.

6. Equipement selon l'une quelconque des revendications précédentes, selon lequel ledit godet (2) présente au moins deux organes de fixation femelles (4), chaque organe de fixation femelle (4) se situant à des extrémités opposées dudit godet (2).

7. Equipement selon la revendication 7, selon lequel ladite unité de chargement (1) présente deux organes de fixation mâles (6) espacés l'un de l'autre, chacun étant adapté à s'engager de manière coulissante avec un organe de fixation femelle (4) respectif.

8. Equipement selon l'une quelconque des revendications précédentes, selon lequel ladite unité de transport (3) présente deux évidements (18) espacés l'un de l'autre, chacun étant adapté à s'engager avec une projection (13) mâle espacée respective se projetant depuis la base dudit godet (2).

9. Equipement selon l'une quelconque des revendications précédentes, selon lequel ladite unité de chargement (1) et ladite unité de transport (3) sont des véhicules à guidage automatique (VGA).

10. Equipement selon l'une quelconque des revendications précédentes, selon lequel ladite unité de chargement (1) est un véhicule à guidage automatique (VGA) et ladite unité de transport (3) est un véhicule à guidage automatique (VGA) monté sur un système de monorail suspendu.

11. Procédé d'extraction de minerai dans une exploitation minière par foudroyage de blocs, ledit procédé comprenant :
a) le chargement de minerai à un site de chargement dans un godet amovible (2) monté sur une unité de chargement (1) ;
b) le transfert dudit godet (2) portant un chargement de minerai depuis l'unité de chargement (1) vers une unité de transport (3) ; et
le transport du godet amovible (2) portant le chargement de minerai depuis le site de chargement vers un broyeur via l'unité de transport.

12. Procédé selon la revendication 11, selon lequel chacune de ladite unité de chargement (1) et de ladite unité de transport (3) présente un axe longitudinal respectif s'étendant depuis l'extrémité avant vers l'extrémité arrière, et ledit godet (2) est de forme allongée présentant un axe longitudinal, et lors du fonctionnement lorsque ledit godet (2) est monté sur ladite unité de chargement (1), l'axe longitudinal dudit godet (2) est disposé de manière orthogonale à l'axe longitudinal de ladite unité de chargement (1), et lorsque ledit godet (2) est transféré à ladite unité de transport (3), ledit godet (2) est disposé à la verticale sur ladite unité de transport (3), l'axe longitudinal dudit godet (2) se situant en parallèle à l'axe longitudinal de ladite unité de transport (3).

13. Procédé selon la revendication 11 ou la revendication 12, comprenant en outre le transfert dudit godet (2) portant le chargement de minerai depuis ladite unité de transport (3) vers un mécanisme de traitement (14) capable de manipuler ledit godet (2) de telle sorte que le chargement de minerai est vidé dans une station de déchargement (12) dudit broyeur.

14. Système d'extraction de minerai comportant l'équipement d'exploitation minière par foudroyage de blocs selon l'une quelconque des revendications 1 à 10, ledit système comprenant :
a) une pluralité desdits godets (2) utilisée pour charger et porter du minerai ;
b) une pluralité desdites unités de chargement (1), chacune étant capable de présenter l'un desdits godets qui y est fixé de manière amovible ;
c) une pluralité desdites unités de transport (3), chacune étant capable de présenter l'un desdits godets qui y est fixé de manière amovible ; et
d) au moins un mécanisme de traitement (14) associé à un site de déchargement (12) d'un broyeur capable de recevoir et manipuler lesdits godets (2), selon lequel, lors du fonctionnement, au moins l'une des unités de chargement (1) présentant un premier desdits godets (2) qui y est fixé est utilisée pour charger un chargement de minerai à un site de chargement, et ledit premier godet est transféré de ladite au moins une unité de chargement (1) vers au moins une desdites unités de transport (3) de telle sorte que ladite au moins une unité de transport (3) est capable de transporter ledit chargement de minerai depuis le site de chargement vers un broyeur.

15. Système selon la revendication 14, selon lequel à la fois lesdites unités de chargement (1) que lesdites unités de transport sont des véhicules à guidage automatique (VGA).
